# EUROPÄISCHE PATENTSCHRIFT

(11) **EP 0 516 969 B1**
(45) Veröffentlichungstag und Bekanntmachung des Hinweises auf die Patenterteilung: **06.03.1996**
(21) Anmeldenummer: 92107219.5
(22) Anmeldetag: 28.04.1992
(51) Int. Cl.: B65G 9/00, B65G 19/02, B61B 10/02

(54) **Fördermittel**
Conveyor means
Moyen de manutention

(30) Priorität: 03.06.1991 DE 9106797 U
(43) Veröffentlichungstag der Anmeldung: 09.12.1992
(73) Patentinhaber: RSL LOGISTIK GMBH & CO, D-86899 Landsberg (DE)
(72) Erfinder: Enderlein, Robby, W-8910 Landsberg/Lech (DE)
(74) Vertreter: Grünecker, Kinkeldey, Stockmair & Schwanhäusser Anwaltssozietät

(56) Entgegenhaltungen:
- EP-A- 0 338 100
- DE-A- 2 112 378
- US-A- 3 827 367

## Beschreibung

Die Erfindung bezieht sich auf ein Fördermittel für eine Hängefördereinrichtung der im Oberbegriff von Anspruch 1 erläuterten Art.

Ein derartiges Fördermittel ist aus der DE-A-21 12 378 bekannt. Das bekannte Fördermittel enthält eine Tragstange, die über zwei bügelartige Laufkatzen an einer Schiene abgehängt ist. Die Stirnseiten der Tragstange enthalten jeweils eine Öse, von denen jeweils zwei horizontale Drehstifte vorstehen, die eine horizontal und quer zur Schiene verlaufende Drehachse bilden. Durch die Öffnung der Öse erstreckt sich jeweils ein senkrecht zur horizontalen Drehachse verlaufender, vertikaler Gelenkstift, der mit seinen beiden aus der Öse herausragenden Enden fest mit der Laufkatze verbunden ist. Ein Verschwenken des Gelenkstiftes relativ zur Tragstange ist nicht möglich. Das Gelenk des bekannten Fördermittels erlaubt somit lediglich Verschwenkbewegungen, die zum Durchfahren von vertikalen und horizontalen Kurven notwendig sind.

Ein weiteres Fördermittel ist aus der EP-A-338 100 bekannt. Die Tragstange des bekannten Fördermittels enthält eine Öse, die in der Nähe der Stirnseite der Tragstange von dieser nach oben wegsteht. Am Bügel ist ebenfalls eine Öse befestigt, die senkrecht zur Öse der Tragstange verläuft. Beide Ösen greifen ineinander ein, wobei ihre Abmessungen derart aufeinander abgestimmt sind, daß sich die Tragstange relativ zum Bügel bewegen kann. Diese Bewegung muß jedoch beschränkt bleiben, um den normalen Förderablauf nicht zu beeinträchtigen.

Der Erfindung liegt die Aufgabe zugrunde, ein Fördermittel derart auszugestalten, daß die Möglichkeiten einer Verschwenkung der Tragstange relativ zum Bügel erweitert werden, ohne daß die Fördereigenschaften im Normalbetrieb negativ beeinflußt werden.

Die Aufgabe wird durch die kennzeichnenden Merkmale des Anspruches 1 gelöst.

Durch die erfindungsgemäße Ausgestaltung des Gelenks mit Gelenkstift und Führung kann die Tragstange bei einfachster konstruktiver Ausgestaltung beispielsweise gewendet werden, so daß beide Seiten der Tragstange mit unterschiedlichen Aufnahmeeinrichtungen für zu fördernde Gegenstände versehen werden können, so daß es nicht mehr erforderlich ist, für jeden dieser Gegenstände ein gesondertes Fördermittel in Bereitschaft zu halten. Darüberhinaus können leere Fördermittel, nach Abnahme eines der beiden Bügel von der Schiene platzsparend mit dem anderen Bügel auf einer Schiene hängend aufbewahrt werden, da die Tragstangen durch das Gelenk senkrecht nach unten hängen. Trotz dieser mannigfaltigen Bewegungsmöglichkeiten wird das Förderverhalten des Fördermittels nicht negativ beeinträchtigt.

Zweckmäßigerweise weist das Gelenk zusätzlich die in Anspruch 2 beschriebene, senkrechte Drehachse auf, die gemäß Anspruch 3 durch den Gelenkstift verläuft.

Die Ansprüche 4 und 5 beschreiben eine besonders bevorzugte, konstruktive einfache und kostengünstig aus Kunststoff zu fertigende Ausgestaltung des Gelenks.

Für Kurvenfahrten od.dgl. ist es zweckmäßig, das in Anspruch 6 beschriebene, weitere Gelenk vorzusehen.

Die Ansprüche 7 bis 11 beschreiben eine konstruktiv besonders bevorzugte Ausgestaltung dieses zweiten Gelenks, das sich ebenfalls kostengünstig aus Kunststoff fertigen läßt.

Durch die Maßnahme nach Anspruch 12 können die Verwendungsmöglichkeiten des erfindungsgemäßen Fördermittels weiter erhöht werden. Durch die in den Aufnahmehohlraum einzuschiebenden Verstärkungsteile kann die Verwindungssteifigkeit der Tragstange und ggf. auch ihr Fördergewicht auf einfache Weise an die Erfordernisse des Betriebs angepaßt werden. Darüberhinaus kann durch diese Konstruktion die Tragstange ebenfalls aus Kunststoff gefertigt werden, ohne daß ihre Festigkeit leidet. Die beschriebene Maßnahme kann auch bei Fördermitteln mit anders ausgestalteten Gelenken eingesetzt werden.

Vorteilhafte konstruktive Weiterbildungen sind den Ansprüchen 13 bis 15 zu entnehmen, wobei insbesondere die Anordnung der Teilungsebene gemäß Anspruch 15 der Festigkeit der Tragstange dient.

Durch die durch das erfindungsgemäß vorgesehene Gelenk eröffnete Möglichkeit, die Tragstangen wenden zu können, ist es möglich, beide beim Fördern jeweils obenliegenden Seiten der Tragstange mit unterschiedlichen Aufnahmeeinrichtungen zu versehen. Besonders bevorzugt ist die in Anspruch 16 beschriebene Einformung von Kerben, auf die beispielsweise Haken von Kleiderbügeln gehängt werden können.

Ein Ausführungsbeispiel der Erfindung wird nachfolgend anhand der Zeichnungen näher erläutert.

Es zeigen:
- Figur 1: eine perspektivische Darstellung eines an einer Schiene hängenden Fördermittels,
- Figur 2: die Innenansicht einer Tragstangenhälfte,
- Figur 3: den Schnitt III-III aus Figur 1,
- Figur 4: den Schnitt IV-IV aus Figur 2,
- Figur 5: eine auseinandergezogene Darstellung der Bestandteile des Gelenks,
- Figur 6: den Schnitt VI-VI aus Figur 5, und
- Figur 7: den Schnitt VII-VII aus Figur 1.

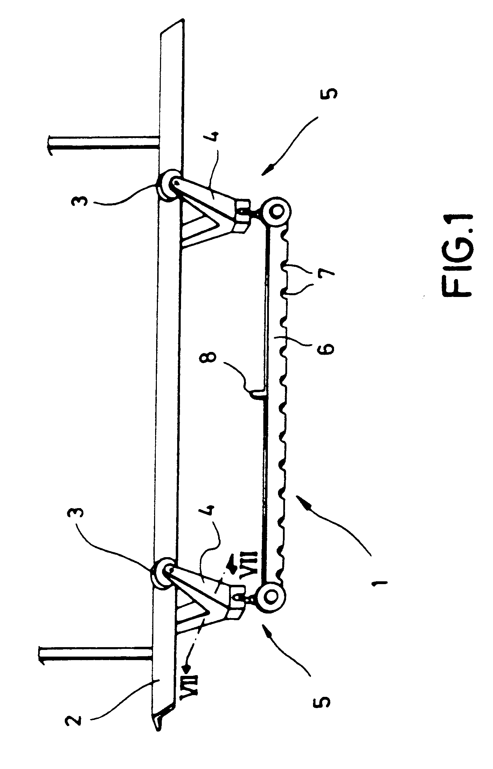

Aus Figur 1 ist in schematischer, perspektivischer Darstellung ein Fördermittel 1 ersichtlich, das auf einer nur teilweise dargestellten Schiene 2 läuft. Die Schiene 2 weist ein dachförmiges Profil auf, auf dessen schräg nach oben weisenden Laufflächen Laufrollen 3 abrollen können. Die Laufrollen 3 sind jeweils paarweise durch einen V- bzw. U-förmigen Bügel 4 miteinander verbunden. Jeweils zwei Bügel 4 sind über eine Gelenkanordnung 5 mit den Stirnseiten einer Tragstange 6 verbunden. Im dargestellten Ausführungsbeispiel weist die Tragstange 6 an der in Figur 1 nach unten weisenden Seite Kerben 7 zur Aufnahme von Kleiderbügelhaken, und an der in Figur 1 nach oben weisenden Seite einen Trennstift 8 auf.

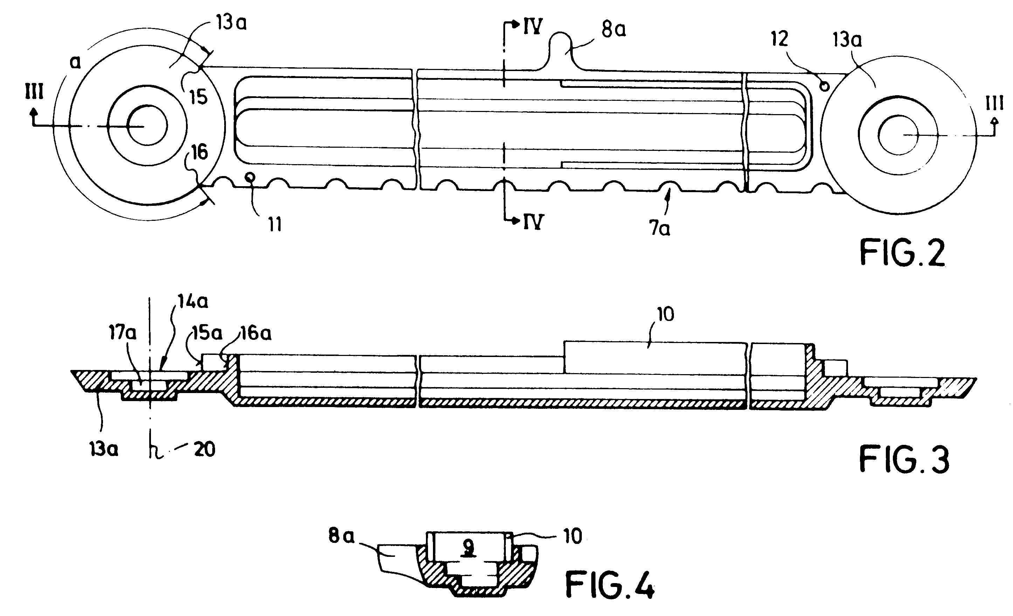

Die Tragstange 6 besteht aus zwei in der senkrechten Mittellinie in Figur 1 geteilten Tragstangenhälften, wobei in den Figuren 2 bis 5 nur eine Hälfte 6a gezeigt ist. Die Trennung erfolgt in einer beim Fördern senkrecht verlaufenden Trennebene und derart, daß sich an jeder Hälfte der Tragstange ein halber Trennstift 8a und die halbe Erstreckung der Kerben 7a befindet. Jede der Tragstangenhälften weist im Inneren einen Hohlraum 9 auf, in den einer oder mehrere nicht gezeichnete Verstärkungsstäbe zur Erhöhung der Verwindungssteifigkeit eingelegt werden können. An der Trennungsfläche steht ein Raststeg 10 in Richtung auf die andere Tragstangenhälfte vor, und kommt mit dieser zum Verbinden der beiden Tragstangenhälften in Eingriff. Es ist weiterhin ein Zentrierstift 11 und eine korrespondierende Zentrieröffnung 12 vorgesehen.

An beiden Stirnseiten der Tragstangenhälften ist jeweils eine Hälfte 13a einer Lagerschale 13 einstückig angeformt. Jede Lagerschalenhälfte erstreckt sich über einen Bereich ihrer Begrenzung nicht bis zur Trennebene durch die Tragstange 6 (Bereich 14a).

Nach dem Zusammensetzen der Hälften zur Lagerschale 13 bilden diese Bereiche einen Schlitz 14, der sich über einen Winkelbereich a in einer beim Fördern senkrechten Ebene über einen Großteil des Umfanges der Lagerschale 13 erstreckt und in Anschlagflächen 15, 16 nahe der Tragstange 6 endet. In jeder Lagerschalenhälfte 13a ist ein abgestufter, kreisförmiger Hohlraum 17a ausgebildet.

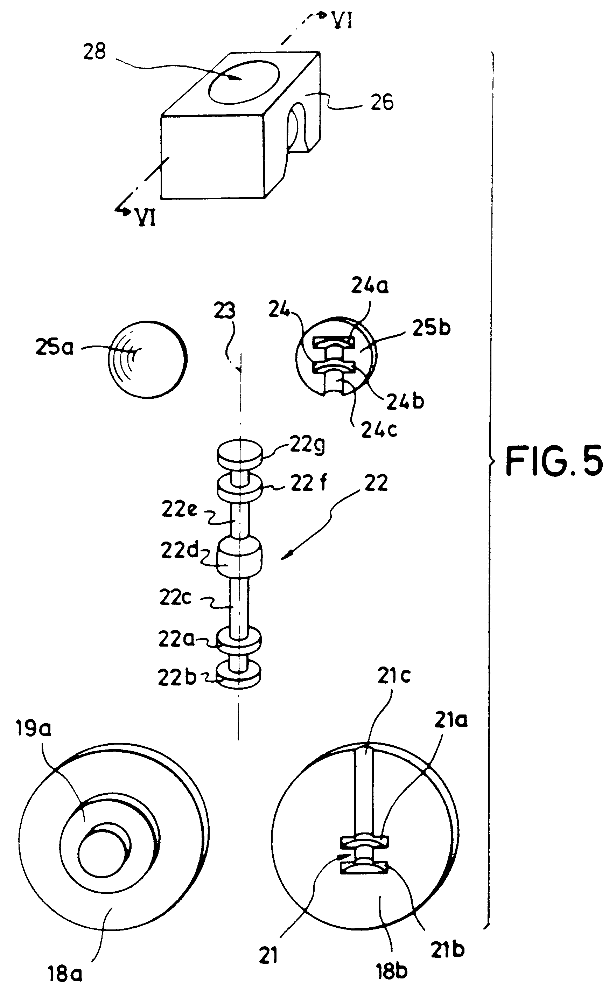

Diesen Hohlraum 17a und den Freiraum im Bereich a bis zur senkrechten Trennebene füllt in jeder Lagerschalenhälfte eine der in Figur 5 bezeichneten Scheiben 18a, 18b aus. Die Durchmesser der Scheiben 18 und der Lagerschalenhälften 13 sind derart aufeinander abgestimmt, daß ihre Umfangsflächen miteinander fluchten. Jede der Scheiben 18 weist an einer Seite abgestufte, kreisförmige Lagerzapfen 19a und 19b auf, die in die Hohlräume 17 eingreifen. Jede der Scheiben ist in ihrer entsprechenden Lagerschale um eine Achse 20 drehbar.

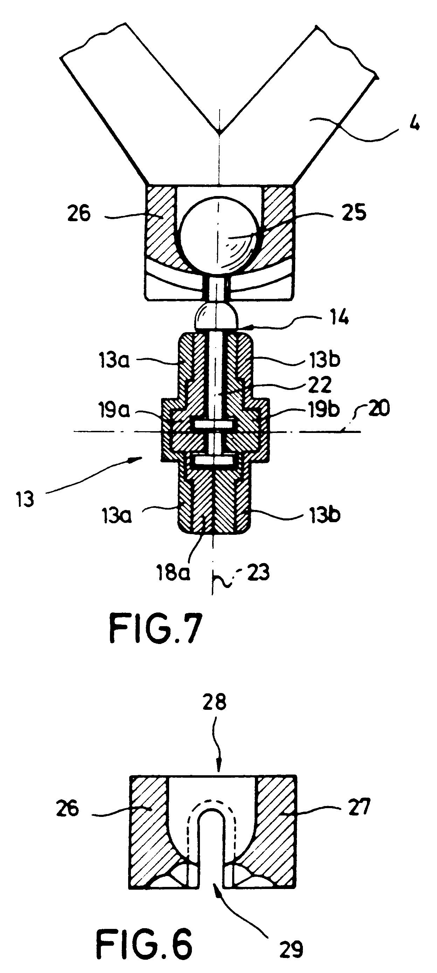

Auf den einander zugewandten Oberflächen weist jede der Scheiben 18a, 18b eine Aufnahmeausnehmung 21 für den halben Umfang eines Gelenkstiftes 22 auf. Die Ausnehmung 21 enthält zwei Erweiterungen 21a und 21b und eine zur Umfangsseite der Scheibe 18 offene Bohrung 21c. In die Erweiterungen 21a, 21b der Ausnehmung 21 greift der Gelenkstift 22 mit Ringstegen 22a und 22b ein, während die Bohrung 21c einen stabförmigen Bereich 22c des Gelenkstiftes 22 aufnimmt. die Länge des stabförmigen Bereiches 22c und der Bohrung 21c sind derart aufeinander abgestimmt, daß ein Stopvorsprung 22d am Umfang der Scheibe 18 aufliegt, wenn der Gelenkstift 22 in die Ausnehmung 21 der Scheibe 18 eingelegt wurde. Wird anschließend die korrespondierende Scheibe mit einer identisch ausgebildeten Ausnehmung 21 aufgelegt, so ist der Gelenkstift 22 zwischen den Scheiben gehalten, kann sich jedoch um eine durch seine Längsmittellinie verlaufende Achse 23 drehen. Oberhalb des Stopvorsprunges 22d weist der Gelenkstift 22 einen weiteren, kürzeren stabförmigen Bereich 22e und wiederum zwei Scheiben- bzw. Ringvorsprünge 22f und 22g auf. Mit diesen Vorsprüngen 22f und 22g und dem dazwischenliegenden, stabförmigen Bereich, kann der Gelenkstift 22 in jeweils zwei identisch ausgebildete, korrespondierende Ausnehmungen 24 in einer Trennfläche zwischen zwei Kugelhälften 25a und 25b eingelegt werden. Auch die Ausnehmung 24 weist zwei den Ringstegen 22f, 22g angepaßte, halbkreisförmige Ausnehmungen 24a und 24b sowie eine zum Umfang der Kugel 25 offene Bohrung 24c auf. Die Kugel 25 kann in einem in Figur 5 und 6 gezeichneten Lagerblock 26 eingesetzt werden. Der Lagerblock 26 weist einen in Form und Durchmesser der Kugel 25 angepaßten Hohlraum 27 auf, der über eine Zugangsöffnung 28 zum Einsetzen der Kugel zugänglich ist. An der der Zugangsöffnung 28 gegenüberliegenden Seite des Lagerblockes 26 ist ein Kreuzschlitz 29 eingearbeitet, der in den Aufnahmehohlraum 27 mündet. Die Lange der Schlitzarme des Kreuzschlitzes 29 bemessen sich nach der notwendigen Bewegungsfreiheit des Gelenkstiftes 22. Die Schlitzkanten sind für den Stopvorsprung 22d abgerundet.

Zur Montage wird zunächst der Gelenkstift 22 in die Kugel 25 eingelegt, die Kugelhälften geschlossen und der Gelenkstift 22 mit der Kugel 25 von oben her durch die Zugangsöffnung 28 in den Lagerblock 26 eingelegt. Dann werden die Scheiben 18a, 18b um den Gelenkstift gelegt und in die Lagerschalenhälften 13a, 13b der Tragstange 6 eingelegt. Nach Verriegeln der Tragstangenhälften wird der Lagerblock 26, wie Figur 7 zeigt, mit seiner die Zugangsöffnung 28 aufweisenden Oberfläche am Bügel 4 befestigt.

Im montierten Zustand kann somit die Tragstange 6 relativ zum Bügel 4 um die horizontale Achse 20 über den gesamten Winkelbereich a verschwenkt werden, wobei der Gelenkstift 22 jeweils am Ende der Verschwenkbewegung an den Anschlagflächen 15 bzw. 16 anschlägt. Die Anschlagflächen 15, 16 sind zweckmäßigerweise so gelegt, daß der Gelenkstift bei Neigungsfahrten im Gefälle oder in der Steigung sich ebenfalls etwas in Richtung auf die Oberseite der Tragstange bewegen kann. Für Kurvenfahrten kann sich der Gelenkstift 22 um die senkrechte Achse 23 drehen.

Soll die Tragstange 6 aus der in Figur 1 gezeichneten Stellung in eine Stellung verschwenkt werden, in der die Kerben 7 zur Aufnahme von Kleiderbügeln nach oben weisen, so wird einer der Bügel 4 von der Schiene 2 abgenommen, und die Tragstange 6 um etwa 90° um die horizontale Achse 20 nach unten verschwenkt und anschließend um die vertikale Achse 23 verdreht, bis die Kerben nach oben weisen. Danach wird der Bügel 4 wieder auf die Schiene gesetzt. Zum Aufbewahren des Fördermittels 1 wird lediglich einer der Bügel 4 von der Schiene genommen. Durch die erfindungsgemäße Ausgestaltung des Gelenkes kann sich das Fördermittel unter Einfluß der Schwerkraft derart ausrichten, daß alle Teile senkrecht nach unten hängen und somit den geringstmöglichen Platz beanspruchen.

Die beschriebenen Teile des Gelenks, außer dem Gelenkstift, und die Quertraverse, außer dem Versteifungsstab, können auf kostengünstige Weise aus Kunststoff gefertigt werden.

In Abwandlung der beschriebenen und gezeichneten Ausführungsbeispiele, kann die Gelenkanordnung 5 konstruktiv abgewandelt werden. Die Tragstange kann mit anderen Aufnahmeeinrichtungen, beispielsweise Klammern, versehen sein. Schließlich kann das Fördermittel statt aus Kunststoff aus einem anderen Material, dann ggf. mehrteilig, gefertigt werden.

## Patentansprüche

1. Fördermittel (1) für eine Hängefördereinrichtung mit einer an zwei Bügeln (4) aufgehängten Tragstange (6) zur Aufnahme zu transportierender Gegenstände, wobei die Bügel (4) mit jeweils einem Laufrollenpaar (3) an einer Schiene (2) abzuhängen sind und über wenigstens ein Gelenk (5) mit einer horizontal und quer zur Schiene (2) verlaufenden Drehachse (20) mit der Tragstange (6) verbunden sind, und wobei die Stirnseite der Tragstange (6) über einen senkrecht zur horizontalen Drehachse (20) verlaufenden Gelenkstift (22) mit dem Bügel (4) verbunden ist, **dadurch gekennzeichnet,** daß der Gelenkstift (22) im Gelenk in einer Führung (14) aufgenommen ist, die ein Verschwenken des Gelenkstiftes (22) relativ zur Tragstange (6) über einen vorbestimmten Winkelbereich (a) in einer senkrecht durch das Fördermittel (1) verlaufenden Ebene gestattet, und daß die Führung durch einen sich über den Verschwenkwinkel (a) erstreckenden Schlitz (14) in einer Lagerschale (13) gebildet ist.

2. Fördermittel nach Anspruch 1, **dadurch gekennzeichnet,** daß das Gelenk eine senkrechte Drehachse (23) aufweist.

3. Fördermittel nach Anspruch 2, **dadurch gekennzeichnet,** daß die senkrechte Drehachse (23) durch die Längsmittellinie des Gelenkstiftes (22) verläuft.

4. Fördermittel nach einem der Ansprüche 1 bis 3, **dadurch gekennzeichnet,** daß in der Lagerschale ein Drehstück (18) um die horizontale Achse (20) drehbar aufgenommen ist, an dem der Gelenkstift (22) befestigt ist.

5. Fördermittel nach Anspruch 4, **dadurch gekennzeichnet,** daß das Drehstück zwei Scheiben (18a, 18b) enthält, die an einander gegenüberliegenden Oberflächen den Gelenkstift (22) aufnehmende Ausnehmungen (21) aufweisen.

6. Fördermittel nach einem der Ansprüche 1 bis 5, **dadurch gekennzeichnet,** daß die Tragstange (6) und der Bügel 84) über ein zweites Gelenk (25, 26) miteinander verbunden sind.

7. Fördermittel nach Anspruch 6, **dadurch gekennzeichnet,** daß das zweite Gelenk (25, 26) ein mit dem Gelenkstift (22) verbundenes Drehstück (25) aufweist, das in einem Lagerhohlraum (27) am Bügel (4) untergebracht ist.

8. Fördermitel nach Anspruch 7, **dadurch gekennzeichnet,** daß das Drehstück eine Kugel (25) ist.

9. Fördermittel nach Anspruch 8, **dadurch gekennzeichnet,** daß die Kugel (25) zweigeteilt ist und im Inneren eine Ausnehmung (24) zur Aufnahme des Gelenkstiftes (22) aufweist.

10. Fördermittel nach einem der Ansprüche 7 bis 9, **dadurch gekennzeichnet,** daß der Lagerhohlraum (27) in einem Lagerblock (26) angeordnet ist, durch den sich eine ein Verschwenken des Gelenkstiftes (22) ermöglichende Durchtrittsöffnung (29) erstreckt.

11. Fördermittel nach Anspruch 10, **dadurch gekennzeichnet,** daß die Durchtrittsöffnung als Kreuzschlitz 829) ausgebildet ist.

12. Fördermittel, insbesondere nach einem der Ansprüche 1 bis 11, **dadurch gekennzeichnet,** daß in der Tragstange (6) ein Aufnahmehohlraum (9) zum wahlweisen Aufnehmen eines Verstärkungsteils vorgesehen ist.

13. Fördermittel nach Anspruch 12, **dadurch gekennzeichnet,** daß die Tragstange (6) zwei lösbar miteinander verbundene Hälften aufweist.

14. Fördermittel nach Anspruch 13, **dadurch gekennzeichnet,** daß die Teilungsebene zwischen den Tragstangenhälften durch die senkrechte Mittelebene verläuft.

15. Fördermittel nach Anspruch 13 oder 14, **dadurch gekennzeichnet,** daß jede Hälfte der Tragstange (6) einstückig mit jeweils einer Hälfte (13a) einer zweigeteilten Lagerschale (13) für das erste Gelenk verbunden ist.

16. Fördermittel nach einem der Ansprüche 1 bis 15, **dadurch gekennzeichnet,** daß an einer Seite der Tragstange (6) Kerben (7) zum Einhängen von an Haken hängenden Gegenständen vorgesehen sind.

## Claims

1. Conveyor means (1) for a suspended conveyor system with a carrier bar (6) suspended from two yokes (4) for carrying articles to be transported, the yokes (4) each being suspendable from a track by a pair of rollers (3) and connected to the carrier bar (6) by at least one linkage (5) with an axis of rotation (20) extending horizontally and at right angles to the track, with the end of the carrier bar (6) connected to the yoke (4) by a link pin (22) extending perpendicularly to the horizontal axis of rotation (20), characterized in that the link pin (22) is held in the linkage in a guide (14) which permits swivelling of the link pin (22) with respect to the carrier bar (6) over a predetermined angular range (a) in a plane extending vertically through the conveyor means (1), and in that the guide is formed by a slot (14) extending over the angle of swivel (a) in a bearing bush (13).

2. Conveyor means according to Claim 1, characterized in that the linkage possesses a vertical axis of rotation (23).

3. Conveyor means according to Claim 2, characterized in that the vertical axis of rotation (23) extends through the longitudinal centreline of the link pin (22).

4. Conveyor means according to any one of Claims 1 to 3, characterized in that a rotary part (18) to which the link pin (22) is attached is held in the bearing bush so as to be rotatable about the horizontal axis (20).

5. Conveyor means according to Claim 4, characterized in that the rotary part comprises two discs (18a, 18b) possessing recesses (21) in their opposing faces to receive the link pin (22).

6. Conveyor means according to any one of Claims 1 to 5, characterized in that the carrier bar (6) and the yoke (4) are connected to one another by a second linkage (25, 26).

7. Conveyor means according to Claim 6, characterized in that the second linkage (25, 26) possesses a rotary part (25) connected to the link pin (22) and accommodated in a bearing cavity (27) on the yoke (4).

8. Conveyor means according to Claim 7, characterized in that the rotary part is a ball (25).

9. Conveyor means according to Claim 8, characterized in that the ball (25) is made in two parts and has a recess (24) in its interior to receive the link pin (22).

10. Conveyor means according to any one of Claims 7 to 9, characterized in that the bearing cavity (27) is arranged in a bearing block (26) through which there extends a passageway (29) allowing pivoting motion of the link pin (22).

11. Conveyor means according to Claim 10, characterized in that the passageway is formed as a cruciform slot (29).

12. Conveyor means, in particular according to any one of Claims 1 to 11, characterized in that a retaining cavity (9) is provided in the carrier bar (6) for optional insertion of a reinforcing part.

13. Conveyor means according to Claim 12, characterized in that the carrier bar (6) comprises two halves releasably connected together.

14. Conveyor means according to Claim 13, characterized in that the parting plane between the carrier bar halves extends through the vertical central plane.

15. Conveyor means according to Claim 13 or 14, characterized in that each half of the carrier bar (6) is integrally joined to one half (13a) of a two-part bearing bush (13) for the first linkage.

16. Conveyor beans according to any one of Claims 1 to 15, characterized in that notches (7) for suspending articles hanging on hooks are provided on one side of the carrier bar (6).

## Revendications

1. Moyen de transport (1) pour un dispositif transporteur suspendu, comportant une barre support (6) accrochée à deux étriers (4) et destinée à recevoir des objets à transporter, les étriers (4) s'accrochant chacun par une paire de galets de roulement (3) à un rail (2) et étant liés à la barre support (6) par au moins une articulation (5) à axe de rotation (20) horizontal et perpendiculaire au rail (2), et le côté frontal de la barre support (6) étant lié à l'étrier (4) par un axe d'articulation (22) s'étendant perpendiculairement à l'axe de rotation horizontal (20), caractérisé en ce que l'axe d'articulation (22) est logé dans l'articulation dans un guidage (14) qui lui permet de basculer par rapport à la barre support (6) dans un domaine angulaire prédéterminé (a) dans un plan vertical traversant le moyen de transport (1), et que le guidage est formé par une fente (14) s'étendant sur le domaine angulaire (a) faite dans un coussinet (13).

2. Moyen de transport selon la revendication 1, caractérisé en ce que l'articulation présente un axe de rotation vertical (23).

3. Moyen de transport selon la revendication 2, caractérisé en ce que l'axe de rotation vertical (23) coïncide avec l'axe longitudinal de l'axe d'articulation (22).

4. Moyen de transport selon l'une des revendications 1 à 3, caractérisé en ce que dans le coussinet est montée tournante autour de l'axe horizontal (20) une pièce (18) à laquelle est fixé l'axe d'articulation (22).

5. Moyen de transport selon la revendication 4, caractérisé en ce que la pièce tournante contient deux disques (18a, 18b) qui présentent, sur des faces en regard, des évidements (21) recevant l'axe d'articulation (22).

6. Moyen de transport selon l'une des revendications 1 à 5, caractérisé en ce que la barre support (6) et l'étrier (4) sont liés par une deuxième articulation (25, 26).

7. Moyen de transport selon la revendication 6, caractérisé en ce que la deuxième articulation (25, 26) présente une pièce tournante (25) liée à l'axe d'articulation (22) et logée dans une cavité (27) faite sur l'étrier (4).

8. Moyen de transport selon la revendication 7, caractérisé en ce que la pièce tournante est une sphère (25).

9. Moyen de transport selon la revendication 8, caractérisé en ce que la sphère (25) est divisée en deux et présente à l'intérieur un évidement (24) destiné à recevoir l'axe d'articulation (22).

10. Moyen de transport selon l'une des revendications 7 à 9, caractérisé en ce que la cavité (27) est située dans un bloc support (26) dans lequel s'étend une ouverture de passage (29) permettant un basculement de l'axe d'articulation (22).

11. Moyen de transport selon la revendication 10, caractérisé en ce que l'ouverture de passage est une fente cruciforme (29).

12. Moyen de transport, en particulier selon l'une des revendications 1 à 11, caractérisé en ce que dans la barre support (6) est prévue une cavité réceptrice (9) destinée à recevoir facultativement un élément de renfort.

13. Moyen de transport selon la revendication 12, caractérisé en ce que la barre support (6) présente deux moitiés jointes et séparables.

14. Moyen de transport selon la revendication 13, caractérisé en ce que le plan de séparation des deux moitiés de la barre support coïncide avec le plan médian vertical.

15. Moyen de transport selon l'une des revendications 13 et 14, caractérisé en ce que chaque moitié de la barre support (6) fait corps avec une moitié (13a) d'un coussinet divisé en deux (13) pour la première articulation.

16. Moyen de transport selon l'une des revendications 1 à 15, caractérisé en ce que sur un côté de la barre support (6) sont prévues des encoches (7) pour l'accrochage d'objets pendant à des crochets.
